# FASCICULE DE BREVET EUROPEEN

(11) **EP 1 087 487 B1**
(45) Date de publication et mention de la délivrance du brevet: **07.05.2008**
(21) Numéro de dépôt: 00420193.5
(22) Date de dépôt: 14.09.2000
(51) Int. Cl.: H02G 7/00

(54) **Spirale de balisage pour réseau électrique**
Markierungsspirale für ein elektrisches Netz
Warning coil for electrical network

(30) Priorité: 22.09.1999 FR 9912107
(43) Date de publication de la demande: 28.03.2001
(73) Titulaire: Dervaux, 42500 Le Chambon-Feugerolles (FR)
(72) Inventeur: Boidard, M. Denis, 42100 Saint Etienne (FR)
(74) Mandataire: Maureau, Philippe

(56) Documents cités:
- US-A- 3 183 883

## Description

L'invention est relative à une spirale de balisage pour réseau électrique, en particulier à moyenne et haute tension, destinée à la protection des oiseaux, par exemple des oiseaux migrateurs.

Ce type de balise est actuellement constitué par un jonc en matière plastique colorée, et par exemple en polychlorure de vinyle, enroulé pour former une spirale comportant, de chaque côté d'une spire centrale ayant un diamètre de l'ordre de 350 mm, des spires dont le rayon d'enroulement va en décroissant jusqu'à la moitié du diamètre du conducteur électrique nu. Chaque balise est fixée sur le conducteur par ses flagelles extrêmes qui sont enroulées autour du conducteur par déformation élastique. Les balises sont espacées les unes des autres d'une valeur de l'ordre de 7 à 15 m.

Ainsi disposées, elles rendent plus visible le conducteur électrique pendant entre deux poteaux ou pylônes et évitent que les oiseaux migrateurs n'apercevant que tardivement ce conducteur, le percutent et se blessent ou s'assomment.

Si de telles balises sont utiles pour la protection des oiseaux, elles présentent des inconvénients dont le plus important est le risque d'endommagement des conducteurs qui les portent.

En raison de leur réalisation dans un matériau isolant électriquement et de leur disposition sur des conducteurs parcourus par des courants alternatifs à moyenne ou haute tension, donc générant des champs électromagnétiques, chaque spirale est soumise à des courants induits superficiels. Les zones de rayons différents de chaque spirale se comportent, sous ces courants induits, comme des microcondensateurs indépendants et ayant des charges différentes. Ces charges de valeurs différentes et qui ne peuvent s'égaliser, en raison du caractère isolant du jonc, parviennent à former des arcs électriques entre diverses zones de la spirale. La répétition des arcs érode la spirale protectrice et surtout modifie la structure moléculaire de son matériau qui peut ainsi prendre feu avec le risque d'endommager le conducteur et de polluer l'environnement.

Le document US-A-3 183 883 décrit une balise réalisée à l'aide de conducteurs

tubulaires. Cette balise se prolonge de part et d'autre par deux flagelles se fixant par enroulement et déformation sur le conducteur électrique.

La présente invention a pour objet de fournir une spirale protectrice qui remédie à ces inconvénients.

A cet effet, la spirale de balisage selon l'invention est conformée suivant les caractéristiques de la revendication 1.

Le contact des bouchons extrêmes avec le conducteur et leur liaison électrique par l'âme tubulaire conductrice assurent l'égalisation des charges électriques de surface et suppriment toute formation d'arcs électriques sur la spirale, donc garantit la longévité de la balise et sa neutralité vis à vis du conducteur et de l'environnement.

D'autres caractéristiques et avantages ressortiront de la description qui suit en référence au dessin schématique annexé représentant, à titre d'exemple, une forme d'exécution de la spirale selon l'invention.
Figure 1 est une vue de côté en élévation d'une spirale de balisage lorsqu'elle est montée sur un conducteur électrique,
Figure 2 est une vue de côté en élévation, et à échelle agrandie, de la spirale de figure 1,
Figure 3 est une vue de côté en coupe longitudinale de l'une des extrémités de la spirale selon l'invention,
Figure 4 est une vue partielle, à échelle agrandie, d'une extrémité de la spirale lorsqu'elle est montée sur un conducteur multibrins.

Dans ce dessin, la référence numérique 2 désigne de manière générale un conducteur électrique nu multibrins, du type utilisé pour le transport de l'énergie électrique dans les réseaux moyenne et haute tension. La référence 3 désigne une spirale de balisage composée d'une spire centrale 4, ayant un diamètre de l'ordre de 350 mm, bordée par des spires 4a, 4b, 4c, de diamètres décroissants, c'est-à-dire présentant un rayon d'enroulement diminuant jusqu'à prendre la valeur de celui du conducteur 2 sur lequel les dernières spires sont enroulées. En pratique, les extrémités de la spirale 3 forment des flagelles 5 qui sont enroulées par des formations élastiques autour du conducteur 2.

Selon l'invention, la spirale 3 est conformée dans un corps tubulaire composé d'une âme tubulaire 6, en matériau conducteur de l'électricité, entouré par une couche 7 de matière synthétique, et par exemple de polychlorure de vinyle, de polyéthylène ou autre, colorée ou neutre.

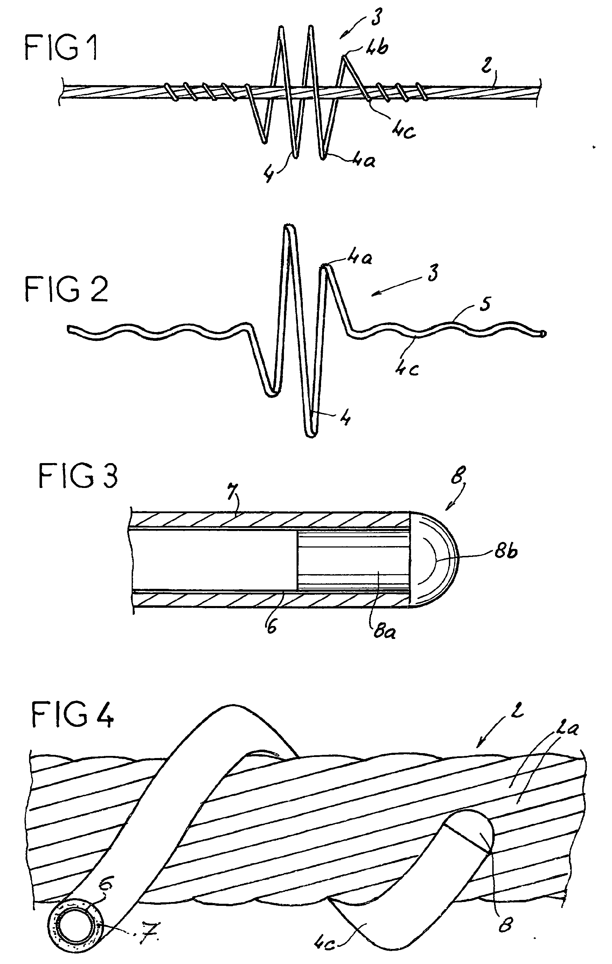

A chacune de ses extrémités, le corps et en conséquence, l'âme tubulaire 6 constituant la spirale 3 est obturé par la tige 8a d'un bouchon 8 en matériau conducteur de l'électricité, et par exemple en aluminium ou en acier inoxydable. Cette tige 8a est engagée serrée dans l'âme tubulaire 6 et cela sur une longueur suffisante pour assurer une bonne conduction de l'électricité entre le bouchon et l'âme et entre l'âme et l'autre bouchon. Le bouchon est muni d'une tête 8b qui, dans la forme d'exécution représentée, est hémisphérique, mais peut présenter toute autre forme pourvu qu'elle vienne aisément en contact avec les brins 2a constituant le conducteur 2, comme montré à la figure 4.

Pour faciliter ce contact, le rayon de la tête 8 est au moins égal à celui du corps tubulaire, constitué par le corps 6 et la couche 7, et, de préférence, est légèrement supérieur.

Dans une forme d'exécution, l'âme tubulaire 6 est constituée par un ruban métallique en aluminium ou acier inoxydable, ayant une épaisseur de l'ordre de 100 micromètres. Ce ruban est conformé en tube cylindrique par rapprochement avec soudage et/ou collage de ses bords longitudinaux, avant surmoulage sur lui de la couche 7 de matière thermoplastique. Cette couche a une épaisseur de l'ordre de 0,5 à 1 mm.

La conformation de la spirale peut être effectuée à chaud en sortie d'extrudeuse ou, ultérieurement et après préchauffage, sur un banc de conformation.

Grâce à sa structure et en particulier au caractère conducteur de son âme tubulaire, tous les microcondensateurs se formant dans les différentes zones radiales de la spirale sont mis au même potentiel, ce qui supprime toute formation d'arc électrique et, en conséquence, toute autodestruction de la spirale.

## Revendications

1. Spirale de balisage pour réseau électrique comprenant une spire centrale solidaire de spires latérales ayant un rayon d'enroulement allant en décroissant et se terminant, de chaque côté, par une flagelle se fixant sur le conducteur électrique (2), par enroulement et déformation élastique de ces spires, la spirale de balisage étant conformée dans un corps tubulaire composé d'une âme tubulaire (6) en matériau conducteur de l'électricité et d'une couche externe (7) en matière plastique, colorée ou non, et comporte, emmanchée dans chacune de ses extrémités du corps, donc de son âme tubulaire (6), la tige (8a) d'un bouchon d'obturation (8) en matériau conducteur de l'électricité, bouchon dont la tête (8b) est apte à venir en contact avec le conducteur (2).

2. Spirale de balisage selon la revendication 1, **caractérisée en ce que** l'âme tubulaire (6) est constituée par un ruban métallique formé en tube cylindrique par rapprochement avec soudage ou collage de ses bords longitudinaux avant surmoulage sur lui d'une couche de matière thermoplastique.

3. Spirale selon la revendication 2, **caractérisée en ce qu'elle** est réalisée à chaud par conformation de l'âme tubulaire métallique (6) en sortie d'extrudeuse.

4. Spirale selon la revendication 1, **caractérisée en ce que** la tête (8a) de chaque bouchon (8) est de forme hémisphérique et son rayon est au moins égal à celui du corps formant la spirale.

## Claims

1. Marker coil for an electrical network, comprising a central turn secured to lateral turns of decreasing winding radius and ending, on each side, in a flagellum which is attached to the electrical conductor (2) by winding and elastic deformation of the turns, the marker coil being shaped from a tubular body made up of a tubular core (6) of electrically conducting material and of an outer layer (7) of coloured or colourless plastic and comprising, push-fitted into each of the ends of the body, and therefore of its tubular core (6), the shank (8a) of a blanking plug (8) made of electrically conducting material, the head (8b) of which plug is able to come into contact with the conductor (2) .

2. Marker coil according to Claim 1, **characterized in that** the tubular core (6) consists of a metal strip formed into a cylindrical tube by bringing its longitudinal edges together and welding or bonding them in place before overmoulding a layer of thermoplastic onto it.

3. Coil according to Claim 2, **characterized in that** it is hot-formed by shaping the metal tubular core (6) as it leaves the extruder.

4. Coil according to Claim 1, **characterized in that** the head (8a) of each plug (8) is of hemispherical shape and its radius is at least equal to that of the body that forms the coil.

## Patentansprüche

1. Markierungsspirale für ein Stromnetz, die eine zentrale Windung aufweist, die fest mit seitlichen Windungen verbunden ist, deren Wickelradius immer mehr abnimmt, und die auf jeder Seite durch eine Geißel, die auf dem elektrischen Leiter (2) durch Aufwickeln und elastische Verformung dieser Windungen befestigt wird, endet, wobei die Markierungsspirale in einem rohrförmigen Körper ausgebildet ist, der aus einem rohrförmigen Kern (6) aus Elektrizität leitendem Material und aus einer Außenschicht (7) aus gefärbtem oder nicht gefärbtem Kunststoff besteht, und in jedes seiner Enden des Körpers, also seines rohrförmigen Kerns (6), eingeschoben die Stange (8a) eines Verschlussdeckels (8) aus Elektrizität leitendem Material aufweist, Verschluss, dessen Kopf (8b) mit dem Leiter (2) in Kontakt kommen kann.

2. Markierungsspirale nach Anspruch 1, **dadurch gekennzeichnet, dass** der rohrförmige Kern (6) aus einem Metallband besteht, das in Form eines zylindrischen Rohrs durch Annäherung mit Verschweißen oder Verkleben seiner Längsränder vor dem Aufformen einer Schicht aus thermoplastischem Stoff auf es gebildet wird.

3. Spirale nach Anspruch 2, **dadurch gekennzeichnet, dass** sie durch Formen des metallischen rohrförmigen. Körpers (6) am Ausgang einer Spritzgussmaschine warm hergestellt wird.

4. Spirale nach Anspruch 1, **dadurch gekennzeichnet, dass** der Kopf (8a) jedes Verschlussdeckels (8) eine Halbkugelform hat und sein Radius mindestens gleich demjenigen des die Spirale bildenden Körpers ist.
